# EUROPÄISCHE PATENTSCHRIFT

(11) **EP 2 803 507 B1**
(45) Veröffentlichungstag und Bekanntmachung des Hinweises auf die Patenterteilung: **13.06.2018**
(21) Anmeldenummer: 14001588.4
(22) Anmeldetag: 06.05.2014
(51) Int. Cl.: B60D 1/48

(54) **Trägeranordnung für eine Anhängekupplung oder einen Lastenträger mit Biegelasche**
Carrier assembly for a trailer coupling or a load bearer with bending strap
Agencement de support pour un attelage ou un support de charge doté d'une languette flexible

(30) Priorität: 08.05.2013 DE 102013008327
(43) Veröffentlichungstag der Anmeldung: 19.11.2014
(73) Patentinhaber: WESTFALIA - Automotive GmbH, 33378 Rheda-Wiedenbrück (DE)
(72) Erfinder: Angermann, Kay, D-04720 Döbeln (DE)
(74) Vertreter: Patentanwälte Bregenzer und Reule Partnerschaftsgesellschaft mbB

(56) Entgegenhaltungen:
- EP-A1- 2 508 367
- US-A1- 2004 239 076

## Beschreibung

Die Erfindung betrifft eine Trägeranordnung für eine Anhängekupplung oder einen Lastenträger gemäß dem Oberbegriff des Anspruches 1.

Eine derartige Trägeranordnung ist beispielsweise in EP 2 508 367 A1 erläutert.

In der nicht vorveröffentlichten deutschen Patentanmeldung DE 10 2011 122 468.1 ist beschrieben, einen Querträger mit Seitenträgern anhand von Biegeelementen zu verbinden. Bei einem Fahrbetrieb können jedoch Belastungen auftreten, die zu einer Lockerung der Verbindung zwischen den miteinander durch die Biegeelemente verbundenen Bauteile, nämlich beispielsweise dem Querträger und den Seitenträgern, führt.

Davon ausgehend ist es die Aufgabe der vorliegenden Erfindung, eine verbesserte Verbindung von Bauteilen einer Trägeranordnung zu schaffen.

Zur Lösung der Aufgabe ist eine Trägeranordnung gemäß der technischen Lehre des Anspruchs 1 vorgesehen.

Es ist ein Grundgedanke der vorliegenden Erfindung, dass die Trägeranordnung anhand relativ einfach herzustellender Verbindungselemente, nämlich einer oder mehrerer Biegelaschen, verbundene Bauteile hat. Die mindestens eine Biegelasche ist durch eine zusätzliche Verbindung, nämlich durch ein Niet, eine Schraube oder dergleichen andere eine zusätzliche formschlüssige Komponente umfassenden Verbindung und/oder eine stoffschlüssige Verbindung mit dem anderen Bauteil verbunden. Beispielsweise ist die Biegelasche zusätzlich geklebt, geschweißt oder dergleichen. Auch eine Lötverbindung, insbesondere eine Hartlötverbindung, ist ohne weiteres vorteilhaft. Bei den Schweißverbindungen ist es beispielsweise möglich, dass die Biegelasche mittels eines Widerstandsschweißverfahrens, z.B. Punktschweißens, mit dem anderen Bauteil verbunden ist. Aber auch eine Verschweißung mit Schweißzusatzwerkstoffen, z.B. Material eines Schweißdrahts, ist vorteilhaft.

Es können also beispielsweise die Seitenträger mit dem Querträger erfindungsgemäß verbunden sein. Es ist aber auch möglich, dass beispielsweise der Querträger oder die Seitenträger mehrteilig sind, also Bauteilkomponenten, zum Beispiel Profilkörperabschnitte, aufweisen, die auf die erfindungsgemäße Weise miteinander verbunden werden. In der nachfolgenden Beschreibung wird zwar das Wort "Bauteil" verwendet, wobei die Erläuterungen sinngemäß aber auch für die Verbindung zwischen Bauteilkomponenten gelten.

Die Biegelasche ist beispielsweise an dem Querträger angeordnet und dient zur Verbindung mit dem Seitenträger oder der Halterung. Die mindestens eine Biegelasche kann aber auch am Seitenträger angeordnet sein und vor diesen zum Querträger hin vorstehen.

Es ist auch möglich, dass beispielsweise die Halterung für die Anhängekupplung oder das Kupplungsteil des Lastenträgers anhand einer oder mehrerer Biegelaschen mit beispielsweise dem Querträger verbunden ist. Weiterhin kann auch der Seitenträger oder der Querträger mehrteilig sein und anhand der Biegelasche oder mehrerer Biegelaschen verbunden sein, wobei die jeweilige Biegelasche zweckmäßigerweise anhand eines Niets, einer Schraube oder einer stoff schlüssigen Verbindung zusätzlich gesichert ist.

Die mindestens eine Biegelasche kann mehrere zueinander winkelige Laschenabschnitte aufweisen. Beispielsweise kann die mindestens eine Biegelasche im Querschnitt u-förmig oder L-förmig sein.

An dieser Stelle sei bemerkt, dass selbstverständlich eine Verbindung zwischen zwei Bauteilen der erfindungsgemäßen Trägeranordnung eine Biegelasche ohne zusätzliche Sicherung, also eine rein kraft- und/oder formschlüssig das andere Bauteil haltende Biegelasche, und mindestens einer weiteren, erfindungsgemäß zusätzlich gesicherten Biegelasche umfassen kann. Mithin müssen also nicht sämtliche Biegelaschen stoffschlüssig mit dem anderen Bauteil verbunden sein.

Die Biegelasche kann beispielsweise stabförmig sein. Bevorzugt ist die Biegelasche jedoch plattenartig.

Die mindestens eine Biegelasche greift formschlüssig in eine Halteaufnahme, insbesondere eine Steckaufnahme, des zweiten Bauteils ein. Es ist auch möglich, dass die mindestens eine dass die mindestens eine Biegelasche vor das eine Bauteil vorsteht und das andere Bauteil umgreift.

Die mindestens eine Biegelasche liegt zweckmäßigerweise an mindestens einer Innenfläche der Halteaufnahme an. Vorzugsweise liegt jedoch die Biegelasche an sämtlichen oder zumindest zwei benachbarten Innenflächen der Halteaufnahme an. Selbstverständlich ist es vorteilhaft, wenn die Biegelasche an den jeweiligen Innenflächen der Halteaufnahme flächig anliegt. Bevorzugt ist in dem flächigen Anlagebereich die oder eine stoffschlüssige Verbindung vorgesehen. Es ist aber auch möglich, dass die Biegelasche mit einem Abschnitt vor die Halteaufnahme vorsteht und dort stoffschlüssig und/oder mittels einer eine Schraube oder ein Niet umfassenden Verbindung zusätzlich gesichert ist.

Die Halteaufnahme umfasst zweckmäßigerweise eine Durchstecköffnung, durch die die mindestens eine Biegelasche durchgesteckt ist. Der in der Durchstecköffnung aufgenommene erste Laschenabschnitt der mindestens einen Biegelasche liegt zweckmäßigerweise formschlüssig in der Durchstecköffnung an, zum Beispiel an einer oder mehreren, insbesondere allen, Innenflächen der Durchstecköffnung. Ein zweiter Laschenabschnitt der Biegelasche steht vor die Durchstecköffnung vor und liegt mit einer Seitenfläche, beispielsweise einer Stirnfläche oder einer zu dem in der Durchstecköffnung befindlichen Oberfläche des ersten Laschenabschnitts winkeligen Seitenfläche, an einer Oberfläche des zweiten Bauteils an, insbesondere flächig. Der zweite Laschenabschnitt ist zweckmäßigerweise quer zur Steckachse oder Längserstreckungsrichtung der Durchstecköffnung orientiert.

Die flächige Anlage des zweiten Laschenabschnitts an dem zweiten Bauteil kann zu einer stoffschlüssigen Verbindung genutzt werden. Mithin ist also die Seitenfläche des zweiten Laschenabschnitts vorzugsweise stoffschlüssig mit dem zweiten Bauteil verbunden. Selbstverständlich eignet sich die Seitenfläche des zweiten Laschenabschnitts auch für eine Verbindung anhand eines Niets oder einer Schraube.

Die mindestens eine Biegelasche und ein Grundkörper des ersten Bauteils sind zweckmäßigerweise integral und einstückig. Beispielsweise ist die Biegelasche aus dem Grundmaterial des Bauteils, aus dem der Grundkörper besteht, durch Schneiden, insbesondere Laserschneiden, Stanzen oder dergleichen gebildet.

Mindestens eines der Bauteile umfasst zweckmäßigerweise einen Profilkörper, beispielsweise mit einem polygonalen, z.B. rechteckigen, oder runden Querschnitt.

Das erste und das zweite Bauteil sind zweckmäßigerweise anhand von mindestens zwei Biegelaschen miteinander verbunden. Die Biegelaschen weisen zweckmäßigerweise in einem Sinne aufeinander zu orientierte und an dem zweiten Bauteil anliegende Laschenabschnitte auf. Es ist aber auch möglich, dass die Biegelaschen voneinander weg orientierte Laschenabschnitte aufweisen. Beispielsweise können die Laschenabschnitte in einem Winkel zueinander stehen. Es ist auch möglich, dass die Laschenabschnitte an einander entgegengesetzten Seiten vor die Durchstecköffnung vorstehen und dort mit einer Seitenfläche des zweiten Bauteils, die sich neben der Durchstecköffnung erstreckt, verbunden sind. Mithin sind also die Laschenabschnitte, die vor die Durchstecköffnung vorstehen, zweckmäßigerweise stoffschlüssig mit dem zweiten Bauteil verbunden und/oder dort mit einer Schraube oder eines Niets befestigt.

Das zweite Bauteil ist beispielsweise anhand von mindestens zwei Biegelaschen mit dem ersten Bauteil verbunden, wobei die Biegelaschen eine Aufnahme für das zweite Bauteil begrenzen und/oder das zweite Bauteil umgreifen. Beispielsweise können die Biegelaschen in der Art von Zungen oder Nasen vor das erste Bauteil vorstehen und somit eine Aufnahmekavität für das zweite Bauteil bilden.

Neben der mindestens einen Biegelasche erstreckt sich zweckmäßigerweise ein Tragarm oder ein Tragrahmen des ersten Bauteils, der sich an dem zweiten Bauteil abstützt. Beispielsweise kann die mindestens eine Biegelasche in einem Innenraum eines Tragrahmen angeordnet sein. Der Tragrahmen steht zweckmäßigerweise vor das erste Bauteil vor, bildet also quasi einen Haltevorsprung. Die Biegelasche kann beispielsweise aus dem Tragrahmen ausgestanzt sein. Es ist auch möglich, dass sich beispielsweise neben der Biegelasche zwei Tragarme seitlich erstrecken, wobei die Biegelasche zwischen den Tragarmen angeordnet ist und sozusagen Zinken einer Gabel gebildet sind.

Die mindestens eine Biegelasche ist beispielsweise in einer Art Fenster, die der Tragrahmen bildet, angeordnet. Beispielsweise ist die Biegelasche aus einem Grundkörper ausgestanzt oder ausgeschnitten, wobei ein Bereich neben der Biegelasche dann den Tragarm oder Tragrahmen bildet.

Die mindestens eine Biegelasche steht zweckmäßigerweise vor den Tragarm oder Tragrahmen vor, beispielsweise vor dessen Unterseite, die sich an dem zweiten Bauteil abstützt. Beispielsweise greift diese Biegelasche in eine Aufnahme, insbesondere eine Steckaufnahme, des zweiten Bauteils ein.

Der Tragarm oder die Tragarme oder der Tragrahmen sind zweckmäßigerweise stoffschlüssig oder mittels einer Schraube oder eines Niets mit dem zweiten Bauteil verbunden. Somit ist also zusätzlich zu der Biegelasche eine weitere Verbindung zwischen den miteinander zu verbindenden Bauteilen vorhanden.

Eine Schmalseite, beispielsweise eine Stirnseite, der mindestens einen Biegelasche weist zweckmäßigerweise eine Schräge zur flächigen Anlage an dem zweiten Bauteil auf. Im Bereich dieser Schräge ist zweckmäßigerweise die stoffschlüssige Verbindung zwischen der Biegelasche und dem zweiten Bauteil gegeben.

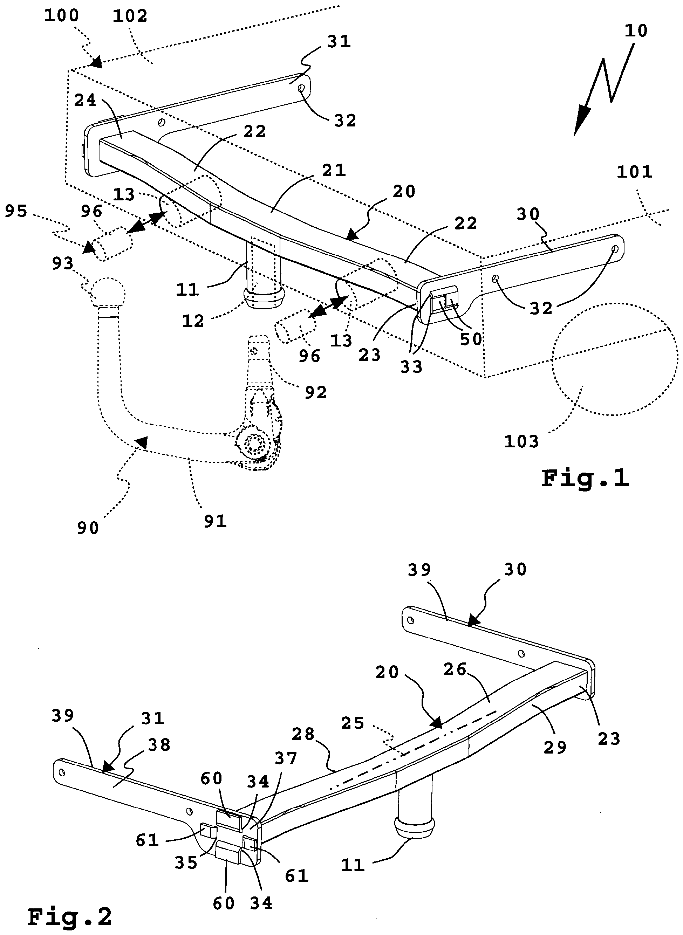

- Figur 1: eine perspektivische Schrägansicht einer ersten Trägeranordnung von in Fahrtrichtung rechts oben,
- Figur 2: die Trägeranordnung gemäß Figur 1, jedoch perspektivisch von in Fahrtrichtung links oben,
- Figur 3: eine hintere Ansicht der Trägeranordnung gemäß Figuren 1 und 2,
- Figur 4: eine Seitenansicht der Trägeranordnung gemäß Figuren 1-3 von rechts,
- Figur 5: eine Seitenansicht der Trägeranordnung gemäß Figuren 1-3 von links,
- Figur 6: eine perspektivische Schrägansicht einer zweiten Trägeranordnung von in Fahrtrichtung rechts oben,
- Figur 7: die Trägeranordnung gemäß Figur 6, jedoch perspektivisch von in Fahrtrichtung links oben,
- Figur 8: eine Draufsicht auf die Trägeranordnung gemäß Figuren 6 und 7 mit einem verkürzt dargestellten Mittelabschnitt,
- Figur 9: eine hintere Ansicht der Trägeranordnung gemäß Figuren 7 und 8,
- Figur 10: eine Seitenansicht der Trägeranordnung gemäß Figuren 7-9 von rechts,
- Figur 11: eine Seitenansicht der Trägeranordnung gemäß Figuren 7-9 von links,

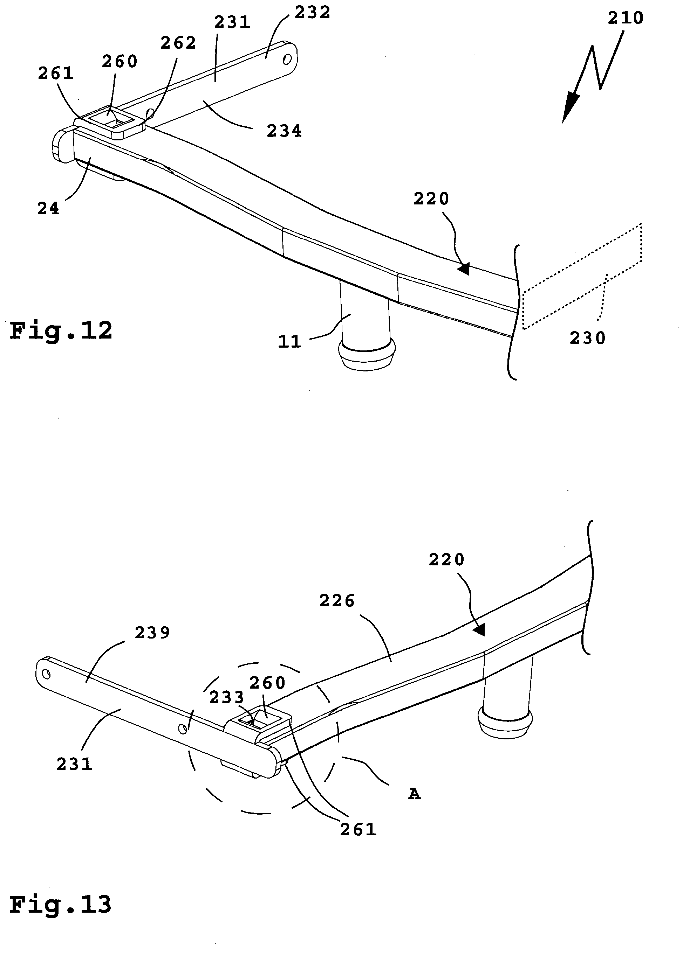

- Figur 12: eine perspektivische Schrägansicht einer dritten Trägeranordnung von in Fahrtrichtung rechts oben,
- Figur 13: die Trägeranordnung gemäß Figur 12, jedoch perspektivisch von in Fahrtrichtung links oben,

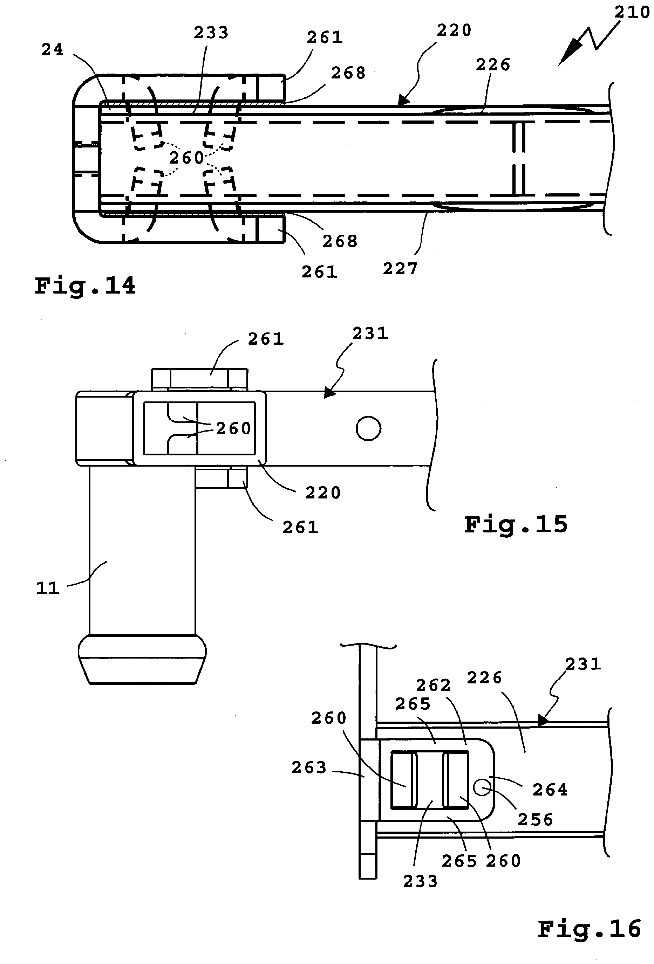

- Figur 14: eine hintere Teil-Ansicht der Trägeranordnung gemäß Figuren 12 und 13,
- Figur 15: eine teilweise Seitenansicht der Trägeranordnung gemäß Figuren 12-14 von rechts, und
- Figur 16: eine Teilansicht der Trägeranordnung gemäß Figuren 12-14, etwa entsprechend einem Ausschnitt A in Figur 13 von oben.

Trägeranordnungen 10, 110 und 210 dienen zur Befestigung einer Anhängekupplung 90 und/oder eines schematisch angedeuteten Lastenträgers 95. Die Trägeranordnungen 10, 110 und 210 sind an einer Karosserie 101 eines Kraftfahrzeugs 100 befestigbar oder befestigt, beispielsweise an dessen Heck 102. Von dem Kraftfahrzeug 100 sind exemplarisch Räder 103 dargestellt. Das Kraftfahrzeug 100 ist beispielsweise ein Personenkraftwagen, insbesondere mit einem Verbrennungsmotor und/oder einem Elektromotor. In der nachfolgenden Beschreibung sind gleiche oder ähnliche Komponenten in der Regel mit denselben Bezugsziffern versehen, teilweise zur Verdeutlichung von Unterschieden mit um jeweils 100 verschiedenen Bezugsziffern.

Die Trägeranordnungen 10, 110 und 210 sind zweckmäßigerweise hinter einem Stoßfänger des Kraftfahrzeugs 100 verborgen. Die Trägeranordnungen 10, 110 und 210 haben Querträger 20, 120 und 220, die sich entlang des Hecks 102 in Fahrzeugquerrichtung des Kraftfahrzeugs 100 erstrecken. Die Querträger 20-220 werden von Seitenträgern 30, 31 sowie Seitenträgern 130 und 131 und Seitenträgern 230, 231 gehalten, die sich jeweils in Fahrzeuglängsrichtung des Kraftfahrzeugs 100 erstrecken. Die Seitenträger 30-231 sind beispielsweise mit der Karosserie 101 verschraubt, wofür Durchtrittsöffnungen 32 an den Seitenträgern 30-231 vorgesehen sind, durch die Schrauben (nicht dargestellt) durchgesteckt und mit der Karosserie 101 verschraubbar sind.

An den Querträgern 20, 120 und 220 sind beispielsweise Halterungen 11 für die Anhängekupplung 90 angeordnet. Die Halterungen 11 umfassen beispielsweise eine Halteaufnahme 12, in die ein Steckende 92 eines Kupplungsarms 91 der Anhängekupplung 90 einsteckbar ist. Am Kupplungsarm 91 befindet sich noch ein Kuppelstück 93, zum Beispiel eine Kupplungskugel, zum Ankuppeln eines Anhängers. Anstelle der Halterungen 11 könnte auch beispielsweise eine Lagereinrichtung zum beweglichen Lagern einer Anhängekupplung, beispielsweise zum Schwenken und/oder linearen Verschieben eines Kupplungsarms, vorgesehen sein, so dass der Kupplungsarm zwischen einer nach hinten vor das Heck 102 vorstehenden Gebrauchsstellung und einer beispielsweise hinter den Stoßfänger des Kraftfahrzeugs 100 zurück geschwenkten, verborgenen Nichtgebrauchsstellung beweglich ist, beispielsweise manuell betätigbar und/oder motorisch betätigbar. Ferner eignen sich die Trägeranordnungen 10-210 auch für fest montierte Kupplungsarme.

An den Querträgern 20, 120 und 220 können auch Halterungen 13 zum Halten des Lastenträgers 95 vorgesehen sein. Die Halterungen 13 umfassen beispielsweise Steckaufnahmen, in die Steckvorsprünge 96 des Lastenträgers 95 einsteckbar sind. Der Lastenträger 95 hat beispielsweise eine nicht dargestellte Tragplattform und/oder Tragelemente zum Tragen einer Last, zum Beispiel Rinnen zum Tragen eines Fahrrads. Bei dem Lastenträger 95 kann es sich beispielsweise um einen Fahrradträger handeln.

Die Trägeranordnungen 10, 110 und 210, insbesondere die Querträger 20-220 und die Seitenträger 30, 31, 130, 131, 230, 231, bestehen zweckmäßigerweise aus Metall, insbesondere Stahl oder Aluminium. Zweckmäßigerweise sind diese Komponenten aus Blech hergestellt.

Die Querträger 20, 120 und 220 weisen beispielsweise einen mittleren Abschnitt 21, an dem die Halterung 11 angeordnet ist, sowie sich zwischen dem mittleren Abschnitt 21 und den Seitenträgern 30-231 erstreckende seitliche Abschnitte 22 auf. Die Längsenden 23 und 24 der Abschnitte 22 sind mit den Seitenträgern 30-230 bzw. 31-231 verbunden, wobei bei den einzelnen Ausführungsbeispielen teilweise an jedem Längsende 23 oder 24 unterschiedliche Verbindungstechniken erläutert sind, um im Rahmen der Erfindung liegende Möglichkeiten aufzuzeigen.

Die Seitenträger 30 und 31 sind beispielsweise plattenartig, wobei selbstverständlich auch Profile, beispielsweise Rundprofile oder Mehrkantprofile ohne weiteres möglich sind. Die Seitenträger 30 und 31 umfassen z.B. Wände 39.

Bei der Trägeranordnung 10 sind am Längsende 23 Biegelaschen 50 vorgesehen, die durch als Steckaufnahmen ausgestaltete Halteaufnahmen 33 an dem vorderen, den Querträger 20 haltenden Längsende des Seitenträgers 30 vorgesehen sind. Die Halteaufnahmen 33 sind beispielsweise als Schlitze ausgestaltet, durch die die Biegelaschen 50 im noch nicht umgebogenen Zustand, d.h. wenn sie sich in Längserstreckungsrichtung 25 des Querträgers 20 erstrecken, durchsteckbar sind.

Die Biegelaschen 50 sind beispielsweise L-förmig und umfassen einen ersten Laschenabschnitt 51 und einen zweiten Laschenabschnitt 52, der etwas schmaler ist als der erste Laschenabschnitt 51. Eine Innen-Querbreite und Innen-Querhöhe der Halteaufnahmen 33 entspricht einer Außen-Querbreite und einer Außen-Querhöhe der Laschenabschnitte 51, so dass diese formschlüssig in den Halteaufnahmen 33 aufgenommen sind.

Die Laschenabschnitte 51 verlaufen in Längserstreckungsrichtung 25 des Querträgers 20 und sind wie die Biegelaschen 50 insgesamt beispielsweise einstückig mit dessen oberer Wand 26 und unterer Wand 27.

Beispielsweise sind die Biegelaschen 50 aus dem Material des Querträgers 20, der beispielsweise einen Profilkörper umfasst mit einem rechteckigen, insbesondere quadratischen Profil, ausgeschnitten oder ausgestanzt. Somit ist die Herstellung der Biegelaschen 50 sehr einfach.

Der Laschenabschnitt 51 geht mit einem Krümmungsabschnitt 53, insbesondere einem Bogen von etwa 90°, in den Laschenabschnitt 52 über.

Eine einer Außenseiten-Oberfläche 36 des Seitenträgers 30 zugeordnete Seitenfläche 55 des Laschenabschnitts 52 ist mit der Außenseiten-Oberfläche 36 stoffschlüssig verbunden, beispielsweise verklebt oder verschweißt. Beispielsweise sind anhand einer Widerstandsschweißung Schweißpunkte 54 vorgesehen. Es kann auch eine Klebstoffschicht 58 vorgesehen sein.

Die Laschenabschnitte 52 sind zueinander komplementär, so dass sie Platz sparend nebeneinander angeordnet sein können und mit der Außenseiten-Oberfläche 36 stoffschlüssig verbunden werden können. Die Laschenabschnitte 52 sind aufeinander zu orientiert. Sie liegen mit ihren Schmalseiten direkt nebeneinander. Eine vordere, freie Stirnseite eines jeweiligen Laschenabschnitts 52 ist zu dem Laschenabschnitt 51 der jeweils anderen Biegelasche 50 benachbart und verläuft sozusagen an einem Seitenschenkel der anderen Biegelasche 50 entlang. Eine jeweilige Biegelasche 50 hat also neben ihrem Laschenabschnitt 52 eine Aussparung für den Laschenabschnitt 52 der anderen Biegelasche 50. Man erkennt, dass die beiden Laschenabschnitte 52 relativ großflächig sind, so dass eine große Oberfläche zur stoffschlüssigen Verbindung mit der Außenseiten-Oberfläche 36 des Seitenträgers 30 zur Verfügung steht.

An dem anderen Längsende 24 des Querträgers 20 sind Biegelaschen 60 und 61 vorgesehen. Die Biegelaschen 60 sind sozusagen in Verlängerung der oberen Wand 26 und unteren Wand 27, während die anderen Biegelaschen 61 einstückig mit einer (in Fahrtrichtung) vorderen Wand 28 und einer hinteren Wand 29 sind. Die Biegelaschen 60 und 61 sind durch als Steckaufnahmen oder Durchstecköffnungen ausgestaltete Halteaufnahmen 34 und 35 des Seitenträgers 31 durchgesteckt, die am vorderen, den Querträger 20 haltenden Endbereich des Seitenträgers 31 vorgesehen sind.

Die Halteaufnahmen 34 und 35 umfassen ebenfalls Durchtrittsöffnungen, d.h. dass die Biegelaschen 60 und 61 durch die Durchtrittsöffnung hindurch gesteckt sind. In den Halteaufnahmen 34 und 35 befinden sich Laschenabschnitte 62, 63 der Biegelaschen 60 und 61 und sind dort formschlüssig aufgenommen.

Die Laschenabschnitte 64 und 65 sind zu den Laschenabschnitten 62 und 63 winkelig, vorliegend rechtwinkelig. Mithin erstrecken sich also zwischen den Laschenabschnitten 62 und 64 sowie 63 und 65 gekrümmte, bogenförmige Laschenabschnitte 66. Im Gegensatz zu den Biegelaschen 50 sind die Biegelaschen 60 und 61 nicht zueinander hin umgefalzt oder umgebogen, sondern voneinander weg. Mithin weisen also die Laschenabschnitte 63 sowie 65 jeweils voneinander weg.

Die Biegelaschen 60 und 61 bilden also sozusagen Haken, mit denen der Querträger 20 mit dem Seitenträger 31 verhakt ist. Es ist also ein formschlüssiger Halt vorhanden.

Die Laschenabschnitte 63 und 65 sind mit ihren Seitenflächen 67, die einer Außen-Oberfläche 36 des Seitenträgers 31 zugeordnet ist, an dieser Außen-Oberfläche 36 stoffschlüssig befestigt, beispielsweise angeschweißt oder mittels einer Klebemasse oder einem sonstigen Verbindungsmaterial angeklebt. Beispielsweise sind einzelne Schweißpunkte vorhanden. Es ist auch möglich, dass beispielsweise die äußeren, freien Schmalseiten der Laschenabschnitte 65 mit der Außen-Oberfläche 36 des Seitenträgers 31 verschweißt sind, beispielsweise mittels einer Schweißnaht 69.

Der Seitenträger 31 weist an seinem vorderen, die Durchstecköffnungen oder Halteaufnahmen 34 und 35 aufweisenden Endbereich einen Halteabschnitt 37 auf, der gegenüber einem Armabschnitt 38 des Seitenträgers 31 größer ist. In der Seitenansicht ergibt sich also eine L-förmige Gestalt des Seitenträgers 31. Der vergrößerte Halteabschnitt 37 sorgt für eine entsprechend große Außen-Oberfläche 36, die zur Verbindung mit den Laschenabschnitten 63 und 65 geeignet ist. Es kann also beispielsweise relativ viel Verbindungsmaterial 68, zum Beispiel Klebstoff, Schweißmaterial oder dergleichen, zwischen der Außen-Oberfläche 36 und den Seitenflächen 67 eingebracht werden, was den Halt der Verbindungen verbessert.

Anstelle oder zusätzlich zu einer Schweißverbindung oder einer Klebeverbindung kann selbstverständlich auch ein zusätzliches Formschlusselement, beispielsweise ein Bolzen, ein Niet oder dergleichen vorgesehen sein. Beispielsweise können die Biegelaschen 50 durch Nieten 56 oder Schrauben 57 gesichert sein.

Bei der Trägeranordnung 10 sind die Biegelaschen 50, 60 und 61 jeweils einstückig mit dem Profil des Querträgers 20. Es versteht sich, dass auch die umgekehrte Konfiguration gegeben sein kann, d.h. dass beispielsweise von Seitenträgern abstehende Laschen in korrespondierende Aufnahmen am Querträger eingreifen.

Bei der Trägeranordnung 110 beispielsweise ist eine derartige Verbindungstechnik vorgesehen. Der Querträger 120 besteht beispielsweise aus einem polygonalen, beispielsweise rechteckigen, Profilkörper oder umfasst einen derartigen Profilkörper, an welchem relativ wenige Maßnahmen notwendig sind, um ihn mit den Seitenträgern 130 und 131 zu verbinden. Die Seitenträger 130 und 131 sind entsprechend ausgestaltet.

Beispielsweise klammern die Seitenträger 130 und 131 den Querträger 120. Von einer plattenartigen Wand 139 des Seitenträgers 130 und 131 stehen beispielsweise Biegelaschen 150 und 160 in der Art von Klammern vor und umklammern den Querträger 120 .

Die Biegelaschen 150 sind beispielsweise an Haltevorsprüngen 151 vorgesehen, die von der plattenartigen Wand 139 in Richtung des Querträgers 120 vorstehen. Der Querträger 120 ist beispielsweise zwischen zwei Haltevorsprüngen 151 aufgenommen.

Die Haltevorsprünge 151 weisen jeweils einen Tragrahmen 152 auf, in dem die jeweilige Biegelasche 150 angeordnet ist. Die Tragrahmen 152 stützen sich an der oberen Wand 126 und der unteren Wand 127 des Querträgers 120 ab. Der Querträger 120 ist sozusagen zwischen den beiden Haltevorsprüngen 151 aufgenommen.

An der oberen Wand 126 und der unteren Wand 127 ist beispielsweise eine Halteaufnahme 133, beispielsweise eine Steckaufnahme oder eine sonstige Aussparung, für die Biegelaschen 150 vorgesehen. Die Biegelaschen 150 tauchen mit ihren vorderen, freien Enden in die Halteaufnahmen 133 ein.

Die Haltevorsprünge 151 könnte man insgesamt auch als Biegelaschen bezeichnen, das sie nämlich einen gekrümmten Laschenabschnitt oder Krümmungsabschnitt 153 aufweisen, der zwischen dem Tragrahmen 152 und der Wand 139 angeordnet ist. Der Tragrahmen 152 und die Biegelasche 150 bilden sozusagen einen zweiten Laschenabschnitt 154.

Eine Unterseite des Tragrahmens 152 ist vorzugsweise stoffschlüssig mit der oberen Wand 126 verbunden, beispielsweise angeklebt. Auch die Biegelasche 150, die in die Halteaufnahme 133 eingreift, kann mit dem Querträger 120 stoffschlüssig verbunden sein, beispielsweise an ihren Schmalseiten mit den Innenwänden der Aussparung oder der Halteaufnahme 133 verbunden sein.

Der Tragrahmen 152 und die Biegelasche 150 sind beispielsweise durch Stanzen, Schneiden oder ein sonstiges Trennverfahren aus einem Stück mit der Wand 139 gebildet. Die Biegelasche 150 ist sozusagen in einem Fenster, nämlich dem Tragrahmen 152, angeordnet. Die Biegelasche 150 steht in der Art einer Nase nach unten in einen Innenraum des als Profilträger ausgestalteten Querträgers 120 vor. Die Biegelasche 150 greift in die Halteaufnahme 133 vorzugsweise formschlüssig ein, zumindest an ihren sich zwischen der Verbindung mit dem Krümmungsabschnitt 153 und ihrem freien Ende erstreckenden Längsseiten.

Auch auf der anderen Seite, im Bereich des Längsendes 24 ist eine klammerartig haltende Laschenanordnung vorgesehen. An dem Seitenträger 131, nämlich dessen Wand 139, sind Biegelaschen 160 und 161 vorgesehen. Die Biegelaschen 160 weisen jeweils einen Krümmungsabschnitt 162 auf, der zwischen einem Laschenabschnitt 163 und der Wand 139 angeordnet ist. Der Krümmungsabschnitt 162 erstreckt sich beispielsweise über einen Bogen oder einen Winkelbereich von etwa 135°. Es versteht sich, dass auch ein anderer Winkelbereich ohne weiteres möglich wäre, z.B. 90°. Mithin ist jedoch die Anordnung zweckmäßigerweise so getroffen, dass die Biegelaschen 160 quasi von oben und von unten her in der Art einer Spange oder einer Klammer den Querträger 120 umgreifen.

Ein vorderer, freier Endbereich des Laschenabschnitts 163, der in Kontakt mit der oberen Wand 126 oder der unteren Wand 127 ist, hat z.B. eine Schräge 164. Mithin ist also eine freie Stirnseite der Biegelaschen 160 abgeschrägt, so dass sie einen großflächigen Kontakt mit der oberen Wand 126 oder der unteren Wand 127 hat. Dort ist zweckmäßigerweise eine stoffschlüssige Verbindung vorgesehen, beispielsweise mittels Klebstoff, eines Verschweißens oder dergleichen.

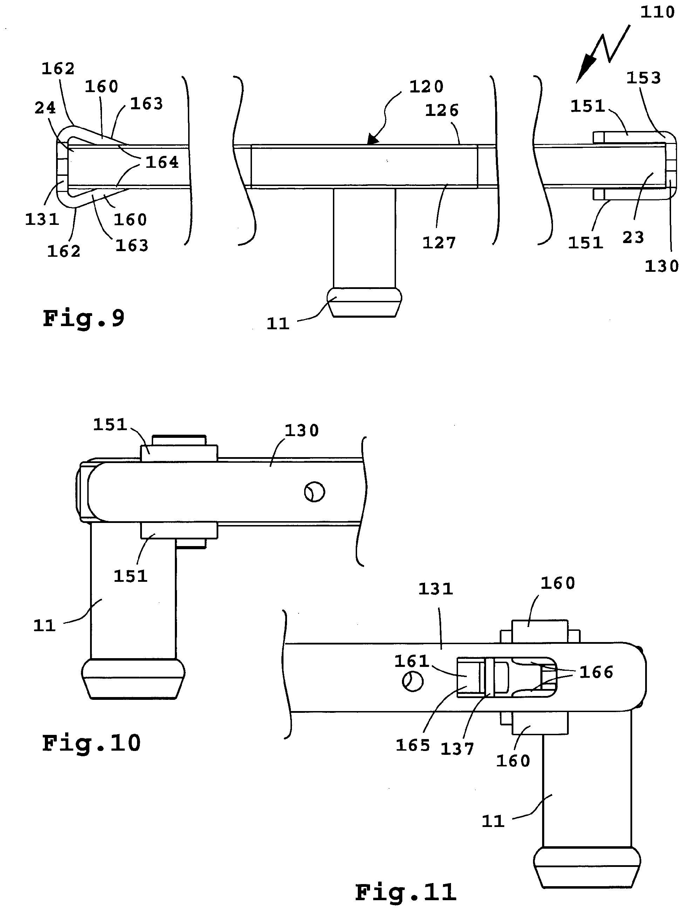

Selbstverständlich könnten die freien Enden der Laschenabschnitte 163 auch in der Art der Biegelaschen 150 in Halteaufnahmen an der oberen und der unteren Wand 126, 127 des Querträgers 120 eingreifen, so dass die freien Enden der Laschenabschnitte 163 in den Innenraum des Querträgers 120 vorstehen. Das ist in Figur 11 dargestellt.

Die Biegelasche 161 steht zur hinteren Wand 129 des Querträgers 120 vor und greift dort in eine Halteaufnahme 134, nämlich eine Aussparung oder ein Fenster an der hinteren Wand 129, ein. Die Biegelasche 161 ist beispielsweise aus der Wand 139 des Seitenträgers 131 ausgestanzt oder ausgeschnitten, so dass dort ein Fenster oder eine Aussparung 135 entsteht. Ein Krümmungsabschnitt 165 der Biegelasche 161 erstreckt sich von der Wand 139 weg. Eine Art Zunge oder vorderer Laschenabschnitt 166 steht in Richtung des Querträgers 120 vor und greift in eine Halteaufnahme 134 ein.

Die Halteaufnahme 134 und die Halteaufnahmen 133 sind beispielsweise im Wesentlichen rechteckig.

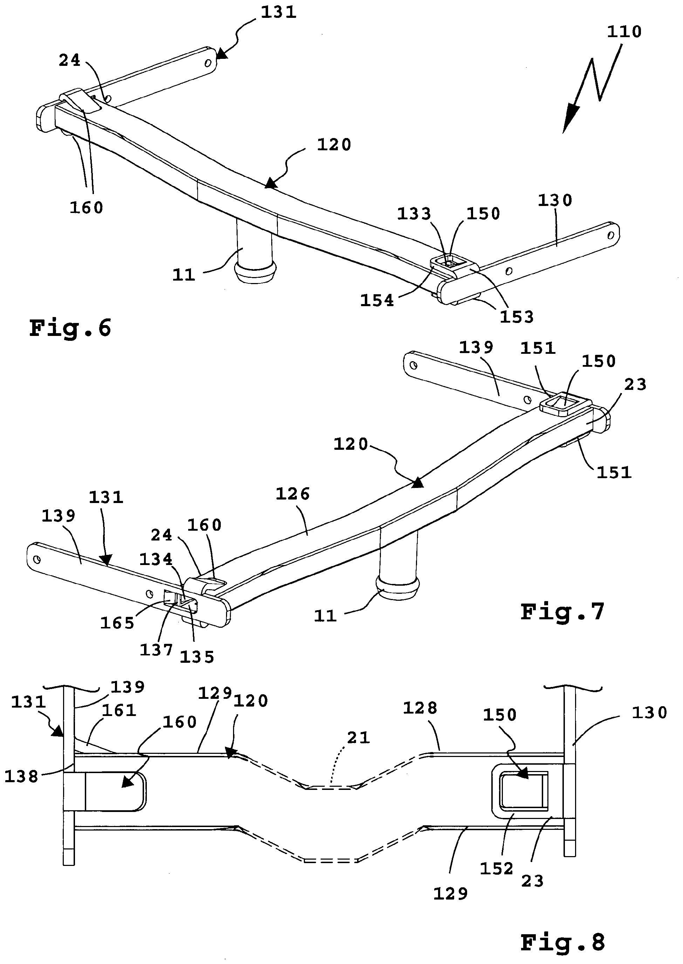

Zwischen den Halteaufnahmen 134, 133 und den freien Stirnseiten 138, die an den Wänden 139 der Seitenträger 130 und 131 flächig anliegen, bleibt etwas Material von den Wänden 126, 127 bzw. 129 stehen. Man sieht beispielsweise in Figur 7 einen Steg 137, der durch einen Abschnitt der hinteren Wand 129 gebildet ist. Der Krümmungsabschnitt 165 erstreckt sich sozusagen zwischen der Anbindung an die Wand 139 und dem Steg 137.

Von der Trägeranordnung 210 ist nur ein in Fahrtrichtung linker Bereich in der Zeichnung detailliert dargestellt, um eine weitere Verbindungstechnik gemäß der Erfindung zu erläutern. Der schematisch dargestellte Seitenträger 230 und der Seitenträger 231 sind mit dem Querträger 220 gleichartig verbunden.

Von einer plattenartigen Wand 239 des Seitenträgers 231 stehen Haltevorsprünge 261 ab. Die Haltevorsprünge 261 sind beispielsweise in einem etwa rechten Winkel zu einer Innenseite 234 des Seitenträgers 231 orientiert.

Die Haltevorsprünge 261 weisen Tragrahmen 262 auf, deren Unterseite auf der oberen Wand 226 und der unteren Wand 227 des Querträgers 220 flächig aufliegen und dort zweckmäßigerweise stoffschlüssig festgelegt sind, beispielsweise mit einem Verbindungsmaterial 268 angeklebt, angeschweißt oder dergleichen. Selbstverständlich wäre auch eine Verschraubung oder eine Verbindung mittels eines Niets 256 möglich.

Zwischen den Haltevorsprüngen 261 und der Wand 239 erstreckt sich ein Krümmungsabschnitt 263. Mithin sind also die Tragrahmen 262 einstückig aus demselben Material wie die Wand 239.

Der Tragrahmen 262 ist beispielsweise etwa rechteckförmig. Aus dem Tragrahmen 262 sind Biegelaschen 260 ausgestanzt, von denen sich eine vom Krümmungsabschnitt 263 und die andere von einem dem Krümmungsabschnitte 263 gegenüberliegenden Schenkel 264 des Tragrahmen 262 weg erstreckt.

Die beiden Biegelaschen 260 liegen einander gegenüber und greifen in eine Halteaufnahme 233 an der oberen Wand 226 und der unteren Wand 227 ein. Die Biegelaschen 260 sind beispielsweise stoffschlüssig mit den Innenwänden der Halteaufnahme 233 verbunden, beispielsweise dort angelötet.

Die Biegelaschen 262 dienen sozusagen als Klammern. Mithin ist also der Querträger 220 anhand der Biegelaschen 260 sozusagen mit dem Seitenträger 239 verklammert. Der nicht dargestellte andere Seitenträger kann in gleicher Art mit dem Querträger 220 verbunden sein.

Es versteht sich, dass auch an den sich zwischen dem Krümmungsabschnitt 263 und dem Schenkel 264 erstreckenden Schenkeln 265 des Tragrahmens 262 Biegelaschen in der Art der Biegelaschen 260 vorgesehen sein können, die in die Halteaufnahme 233 eingreifen.

Eine Lötverbindung, insbesondere eine Hartlötverbindung, kann auch an anderer Stelle vorteilhaft sein. Beispielsweise können die Biegelaschen 50 sowie 60 und 61 sehr günstig mit Lötmaterial oder sogenanntem Lot mit den Seitenträgern 30 und 31 verbunden sein. Das Lot kriecht sozusagen zwischen die jeweiligen miteinander zu verbindenden Bereiche, beispielsweise auch zwischen die Stirnseiten des Querträgers 20 und die diesem gegenüberliegenden Innenseiten der Seitenträger 30 und 31.

Auch bei der Trägeranordnung 210 ist eine Lötverbindung günstig. Beispielsweise kriecht das Lot zwischen die Unterseiten der Tragrahmen 262 und die obere Wand 226 und die untere Wand 227 und schafft dort eine stoffschlüssige Verbindung zwischen den Haltevorsprüngen 261 und dem Querträger 220. Das Lot kann dann auch beispielsweise zwischen die Biegelaschen 260 und die Innenwände der Halteaufnahme 233 gelangen und dort für eine stoffschlüssige, feste Verbindung sorgen.

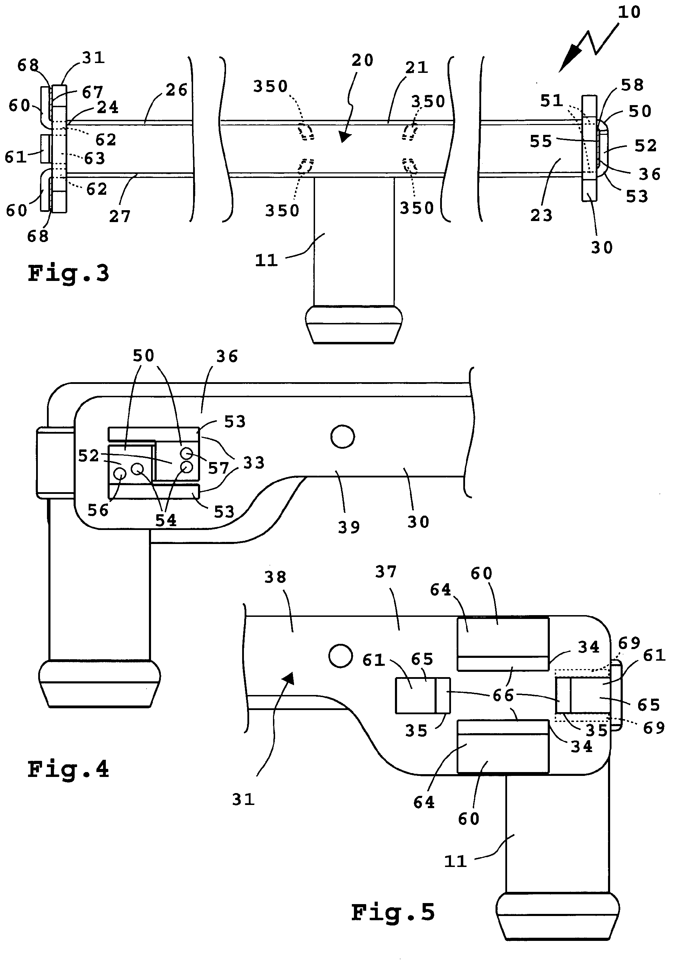

Selbstverständlich ist es auch möglich, dass beispielsweise von den Querträgern 20-220 Biegelaschen 350, zum Beispiel nach unten und/oder in den jeweiligen Innenraum des Querträgers hinein, abstehen und als Halterung oder Aufnahme für beispielsweise die Halterung 11, also z.B. eine Steckhülse für einen Kupplungsarm, dienen. Das ist in Figur 3 angedeutet.

Zusammenfassend kann man also bei sämtlichen vorgenannten Ausführungsbeispielen festhalten, dass zusätzlich zu einer formschlüssigen Verbindung zwischen den zu verbindenden Bauteilen, nämlich dem Querträger und den Seitenträgern aufgrund der Biegelaschen zusätzlich eine Sicherung durch den Stoffschluss und/oder durch Schrauben oder Nieten geschaffen wird. Dadurch ist eine feste Verbindung zwischen den miteinander zu verbindenden Bauteilen gegeben.

## Patentansprüche

1. Trägeranordnung für eine Anhängekupplung oder einen Lastenträger, als Bauteile umfassend einen Querträger (20; 120; 220) und mindestens eine an dem Querträger (20; 120; 220) angeordnete Halterung (11, 13) für eine Anhängekupplung oder für ein Kupplungsteil eines Lastenträgers und gegebenenfalls mit dem Querträger (20; 120; 220) verbundene Seitenträger zur Montage an einem Heck einer Karosserie eines Fahrzeugs, wobei mindestens zwei der Bauteile der Trägeranordnung (10; 110; 210) oder mindestens zwei von deren Bauteilkomponenten mittels mindestens einer an einem ersten der Bauteile und/oder der Bauteilkomponenten angeordneten Biegelasche (50, 60; 150, 160; 260) mit dem zweiten der Bauteile oder der Bauteilkomponenten verbunden ist, und wobei die mindestens eine Biegelasche (50, 60; 150, 160; 260) anhand einer stoffschlüssigen Verbindung und/oder mittels einer eine Schraube (57) oder eines Niets (56) umfassenden Verbindung mit dem zweiten Bauteil oder der zweiten Bauteilkomponente verbunden ist, **dadurch gekennzeichnet, dass** die mindestens eine Biegelasche (50, 60; 150, 160; 260) in eine Halteaufnahme (33-35; 133, 134; 233) des zweiten Bauteils formschlüssig eingreift.

2. Trägeranordnung (10; 110; 210) nach Anspruch 1, **dadurch gekennzeichnet, dass** die mindestens eine Biegelasche (50, 60; 150, 160; 260) das zweite Bauteil umgreift.

3. Trägeranordnung nach Anspruch 1 oder 2, **dadurch gekennzeichnet, dass** die mindestens eine Biegelasche (50, 60; 150, 160; 260) an mindestens einer Innenfläche der Halteaufnahme (33-35; 133, 134; 233), insbesondere an sämtlichen Innenflächen der Halteaufnahme (33-35; 133, 134; 233), anliegt.

4. Trägeranordnung nach Anspruch 2 oder 3, **dadurch gekennzeichnet, dass** die Halteaufnahme (33-35; 133, 134; 233) eine Steckaufnahme oder eine Durchstecköffnung umfasst, in die oder durch die die mindestens eine Biegelasche (50, 60; 150, 160; 260) eingesteckt oder durchgesteckt ist.

5. Trägeranordnung nach einem der Ansprüche 2 bis 4, **dadurch gekennzeichnet, dass** ein erster Laschenabschnitt (51) der mindestens einen Biegelasche (50, 60; 150, 160; 260) in der Durchstecköffnung angeordnet ist und eine Seitenfläche (55) eines zweiten Laschenabschnitts (52) der Biegelasche (50, 60; 150, 160; 260) an einer Oberfläche (36) des zweiten Bauteils flächig anliegt.

6. Trägeranordnung nach einem der vorhergehenden Ansprüche, **dadurch gekennzeichnet, dass** die mindestens eine Biegelasche (50, 60; 150, 160; 260) und ein Grundkörper des ersten Bauteils integral und einstückig sind.

7. Trägeranordnung nach einem der vorhergehenden Ansprüche, **dadurch gekennzeichnet, dass** das erste und das zweite Bauteil anhand von mindestens zwei Biegelaschen (50, 60; 150, 160; 260) verbunden sind, die in einem Sinne aufeinander zu oder voneinander weg orientierte, an dem zweiten Bauteil anliegende Laschenabschnitte (52) aufweisen.

8. Trägeranordnung nach einem der vorhergehenden Ansprüche, **dadurch gekennzeichnet, dass** das zweite Bauteil anhand von mindestens zwei Biegelaschen (50, 60; 150, 160; 260) mit dem ersten Bauteil verbunden ist, wobei die Biegelaschen (50, 60; 150, 160; 260) eine Aufnahme für das zweite Bauteil begrenzen und/oder das zweite Bauteil klammerartig umgreifen.

9. Trägeranordnung nach einem der vorhergehenden Ansprüche, **dadurch gekennzeichnet, dass** das erste oder zweite Bauteil einen Profilkörper, insbesondere mit einem rechteckigen oder runden Querschnitt, bildet oder aufweist.

10. Trägeranordnung nach einem der vorhergehenden Ansprüche, **dadurch gekennzeichnet, dass** sich neben der mindestens einen Biegelasche (50, 60; 150, 160; 260) ein Tragarm oder Tragrahmen (152; 262) des ersten Bauteils erstreckt, der sich an dem zweiten Bauteil abstützt.

11. Trägeranordnung nach Anspruch 10, **dadurch gekennzeichnet, dass** die mindestens eine Biegelasche (50, 60; 150, 160; 260) vor den Tragarm oder Tragrahmen (152; 262) vorsteht und insbesondere in eine Aufnahme des zweiten Bauteils eingreift.

12. Trägeranordnung nach Anspruch 10 oder 11, **dadurch gekennzeichnet, dass** der Tragarm oder Tragrahmen (152; 262) stoffschlüssig oder mittels einer Schraube (57) oder eines Niets (56) mit dem zweiten Bauteil verbunden ist.

13. Trägeranordnung nach einem der vorhergehenden Ansprüche, **dadurch gekennzeichnet, dass** die stoff schlüssige Verbindung eine Verschweißung und/oder eine Verklebung und/oder eine Lötverbindung umfasst.

14. Trägeranordnung nach einem der vorhergehenden Ansprüche, **dadurch gekennzeichnet, dass** eine Schmalseite, insbesondere eine Stirnseite, der mindestens einen Biegelasche (50, 60; 150, 160; 260) eine Schräge (164) zur flächigen Anlage an dem zweiten Bauteil aufweist.

## Claims

1. Support assembly for a trailer coupling or a load carrier, as components including a cross-member (20; 120; 220) and at least one holder (11, 13) fitted to the cross-member (20; 120 for a trailer coupling or for a coupling part of a load carrier and where applicable with side members connected to the cross-member (20; 120; 220) for fitting to a rear of a vehicle body, wherein at least two of the components of the support assembly (10; 110; 210) or at least two of its component parts are connected to the second of the components or the component parts by means of at least one bending lug (50, 60; 150, 160; 260) fitted to a first of the components and/or the component parts, and wherein the bending lug or lugs (50, 60; 150, 160; 260) is or are connected to the second component or the second component part with the aid of a material bonding connection and/or by means of a connection including a bolt (57) or a rivet (56), **characterised in that** bending lug or lugs (50, 60; 150, 160; 260) engages or engage positively in a retaining socket (33-35; 133, 134; 233) of the second component.

2. Support assembly (10; 110; 210) according to claim 1, **characterised in that** the bending lug or lugs (50, 60; 150, 160; 260) encompasses or encompass the second component.

3. Support assembly (10; 110; 210) according to claim 1 or 2, **characterised in that** the bending lug or lugs (50, 60; 150, 160; 260) fit closely against at least one inner surface of the retaining socket (33-35; 133, 134; 233), in particular against all inner surfaces of the retaining socket (33-35; 133, 134; 233).

4. Support assembly according to claim 2 or 3, **characterised in that** the retaining socket (33-35; 133, 134; 233) comprises a plug-in socket or a push-through hole, into or through which the bending lug or lugs (50, 60; 150, 160; 260) is or are inserted or pushed through.

5. Support assembly according to any of claims 2 to 4, **characterised in that** a first lug section (51) of the bending lug or lugs (50, 60; 150, 160; 260) is fitted in the push-through hole, and a side face (55) of a second lug section (52) of the bending lug (50, 60; 150. 160; 260) lies flat against a surface (36) of the second component.

6. Support assembly according to any of the preceding claims, **characterised in that** the bending lug or lugs (50, 60; 150, 160; 260) and a base body of the first component are integral and in one piece.

7. Support assembly according to any of the preceding claims, **characterised in that** the first and second component are connected with the aid of at least two bending lugs (50, 60; 150, 160; 260) which have lug sections (52) fitting closely against the second component and oriented in one direction towards or away from one another.

8. Support assembly according to any of the preceding claims, **characterised in that** the second component is connected to the first component with the aid of at least two bending lugs (50, 60; 150, 160; 260), wherein the bending lugs (50, 60; 150, 160; 260) bound a socket for the second component and/or encompass the second component in the manner of a clamp.

9. Support assembly according to any of the preceding claims, **characterised in that** the first or second component forms or has a profile body, in particular with a rectangular or circular cross-section.

10. Support assembly according to any of the preceding claims **characterised in that**, next to the bending lug or lugs (50, 60; 150, 160; 260) there extends a support arm or support frame (152; 262) of the first component, which rests on the second component.

11. Support assembly according to claim 10, **characterised in that** the bending lug or lugs (50, 60; 150, 160; 260) protrudes or protrude beyond the support arm or support frame (152; 262) and in particular engages or engage in a socket of the second component.

12. Support assembly according to claim 10 or 11, **characterised in that** the support arm or support frame (152; 262) is connected to the second component by material bonding or by means of a bolt (57) or a rivet (56).

13. Support assembly according to any of the preceding claims, **characterised in that** the material bonding connection comprises welding and/or gluing and/or a solder connection.

14. Support assembly according to any of the preceding claims, **characterised in that** a narrow side, in particular an end face, of the bending lug or lugs (50, 60; 150, 160; 260) has a chamfer (164) for flat contact with the second component.

## Revendications

1. Ensemble de support pour un attelage de remorque ou un support de charges, comprenant en tant que composants une traverse (20 ; 120 ; 220) et au moins une fixation (11, 13) disposée au niveau de la traverse (20 ; 120 ; 220) pour un attelage de remorque ou pour une pièce d'attelage d'un support de charge et éventuellement des supports latéraux reliés à la traverse (20 ; 120 ; 220), pour un montage au niveau d'une partie arrière d'une carrosserie d'un véhicule, dans lequel au moins deux des composants de l'ensemble de support (10 ; 110 ; 220) ou au moins deux de leurs composantes de composant sont reliés au deuxième des composants ou des composantes de composant au moyen d'au moins une languette flexible (50, 60 ; 150, 160 ; 260) disposée au niveau d'un premier des composants et/ou des composantes de composant, et dans lequel l'au moins une languette flexible (50, 60 ; 150, 160 ; 260) est reliée au deuxième composant ou à la deuxième composante de composant à l'aide d'une liaison par liaison de matière et/ou au moyen d'une liaison comprenant une vis (57) ou un rivet (56), **caractérisé en ce que** l'au moins une languette flexible (50, 60 ; 150, 160 ; 260) vient en prise par complémentarité de forme avec un logement de maintien (33 - 35 ; 133, 134 ; 233) du deuxième composant.

2. Ensemble de support (10; 110; 210) selon la revendication 1, **caractérisé en ce que** l'au moins une languette flexible (50, 60 ; 150, 160 ; 260) entoure le deuxième composant.

3. Ensemble de support selon la revendication 1 ou 2, **caractérisé en ce que** l'au moins une languette flexible (50, 60 ; 150, 160 ; 260) repose au niveau d'au moins une face intérieure du logement de maintien (33 - 35 ; 133, 134 ; 233), en particulier au niveau de toutes les faces intérieures du logement de maintien (33-35 ; 133, 134 ; 233).

4. Ensemble de support selon la revendication 2 ou 3, **caractérisé en ce que** le logement de maintien (33 - 35 ; 133, 134 ; 233) est un logement d'enfichage ou une ouverture de passage par enfichage, dans lequel ou à travers laquelle l'au moins une languette flexible (50, 60 ; 150, 160 ; 260) est enfichée ou passée par enfichage.

5. Ensemble de support selon l'une quelconque des revendications 2 à 4, **caractérisé en ce qu'**une première section de languette (51) de l'au moins une languette flexible (50, 60 ; 150, 160 ; 260) est disposée dans l'ouverture de passage par enfichage, et une face latérale (55) d'une deuxième section de languette (52) de la languette flexible (50, 60 ; 150, 160 ; 260) repose à plat au niveau d'une surface (36) du deuxième composant.

6. Ensemble de support selon l'une quelconque des revendications précédentes, **caractérisé en ce que** l'au moins une languette flexible (50, 60 ; 150, 160 ; 260) et un corps de base du premier composant sont d'un seul tenant.

7. Ensemble de support selon l'une quelconque des revendications précédentes, **caractérisé en ce que** le premier et le deuxième composant sont reliés à l'aide d'au moins deux languettes flexibles (50, 60 ; 150, 160 ; 260), qui présentent des sections de languette (52) orientées en un sens les unes vers les autres ou éloignées les unes des autres, reposant au niveau du deuxième composant.

8. Ensemble de support selon l'une quelconque des revendications précédentes, **caractérisé en ce que** le deuxième composant est relié au premier composant à l'aide d'au moins deux languettes flexibles (50, 60 ; 150, 160 ; 260), dans lequel les languettes flexibles (50, 60 ; 150, 160 ; 260) délimitent un logement pour le deuxième composant et/ou entourent à la manière d'une agrafe le deuxième composant.

9. Ensemble de support selon l'une quelconque des revendications précédentes, **caractérisé en ce que** le premier ou le deuxième composant forme ou présente un corps profilé, en particulier pourvu d'une section transversale rectangulaire ou ronde.

10. Ensemble de support selon l'une quelconque des revendications précédentes, **caractérisé en ce qu'**un bras porteur ou un cadre porteur (152 ; 262) du premier composant s'étend à côté de l'au moins une languette flexible (50, 60 ; 150, 160 ; 260), lequel prend appui au niveau du deuxième composant.

11. Ensemble de support selon la revendication 10, **caractérisé en ce que** l'au moins une languette flexible (50, 60 ; 150, 160 ; 260) fait saillie du bras porteur ou du cadre porteur (152 ; 262) et vient en prise en particulier avec un logement du deuxième composant.

12. Ensemble de support selon la revendication 10 ou 11, **caractérisé en ce que** le bras porteur ou le cadre porteur (152 ; 262) est relié au deuxième composant par liaison de matière ou au moyen d'une vis (57) ou d'un rivet (56).

13. Ensemble de support selon l'une quelconque des revendications précédentes, **caractérisé en ce que** la liaison par liaison de matière comprend un soudage et/ou un collage et/ou une liaison par brasage.

14. Ensemble de support selon l'une quelconque des revendications précédentes, **caractérisé en ce qu'**un côté étroit, en particulier un côté frontal, de l'au moins une languette flexible (50, 60 ; 150, 160 ; 260) présente un chanfrein (164) pour venir en appui à plat au niveau du deuxième composant.
